# FASCICULE DE BREVET EUROPEEN

(11) **EP 0 889 109 B1**
(45) Date de publication et mention de la délivrance du brevet: **11.02.2004**
(21) Numéro de dépôt: 98103755.9
(22) Date de dépôt: 04.03.1998
(51) Int. Cl.: C09K 17/36, C09K 3/18

(54) **Procédé de traitement d'un substrat pour favoriser l'économie d'eau**
Verfahren zum Behandeln eines Substrats zum Sparen von Wasser
Method for treating a substrate for saving water

(30) Priorité: 03.07.1997 EP 97111134
(43) Date de publication de la demande: 07.01.1999
(73) Titulaire: SAREA A.G., CH-6330 Cham (CH)
(72) Inventeur: Hirsbrunner, Pierre, 1802 Corseaux (CH); Horman, Ian, 1807 Blonay (CH)
(74) Mandataire: Thomas, Alain

(56) Documents cités:
- EP-A- 0 341 334
- EP-A- 0 657 521
- US-A- 5 383 943
- US-A- 5 580 192
- US-A- 5 595 957
- EMMERICH, W. E. ET AL: "Relation between soil properties and effectiveness of low-cost water-harvesting treatments" SOIL SCI. SOC. AM. J. (1987), 51(1), 213-19 CODEN: SSSJD4;ISSN: 0361-5995, XP002049042
- CHEMICAL ABSTRACTS, vol. 83, no. 1, 5 janvier 1976 Columbus, Ohio, US; abstract no. 465263, PLUEDDEMANN, EDWIN P.: "Soil treatment with silicones for water harvesting" XP002049043 & U. S., AGRIC. RES. SERV., WEST. REG., [REP.] (1975), ARS-W-22, 76-83 CODEN: XARWAW,

## Description

L'invention concerne un procédé de traitement d'un substrat avec des méthylsiliconates de sodium ou de potassium pour le rendre hydrophobe.

Dans le brevet EP 341'334, il est déjà connu de faire un traitement du sol pour rendre ledit sol hydrophobe. Ce traitement consiste a sprayer sur le sol une émulsion à base de polymère de silane. La solution recherchée selon ce procédé consiste à faire un traitement in situ directement sur le sol à traiter. L'article de W.E. Emmerich paru dans Soil Sc. Soc. Am. J., 1987, pages 213-219, concerne un moyen de traitement du sol pour le rendre hydrophobe en vue de collecter l'eau de ruissellement.

Le but de la présente invention est de faire un traitement sur un substrat de manière industrielle et ensuite de proposer éventuellement au consommateur ce substrat déjà traité et prêt à l'emploi. Le consommateur n'a de ce fait aucune manipulation chimique à faire.

La présente invention concerne un procédé de traitement d'un substrat avec des méthylsiliconates de sodium ou de potassium pour le rendre hydrophobe, de manière à ce que ledit substrat permette une bonne rétention d'eau lorsqu'il est appliqué sur un sol à protéger, lorsqu'il est sur un sol à protéger ou de manière à ce que ledit substrat soit imperméable à l'eau.

Dans la première forme de réalisation de l'invention, la raison de l'application sur un sol à protéger est que ce sol contient une certaine quantité d'eau et le substrat ainsi déposé permet de retarder l'évaporation de l'eau du sol sous-jacent.

Dans une deuxième forme de réalisation de l'invention, on peut aussi envisager un traitement in situ du substrat par traitement superficiel du sol pour éviter l'évaporation d'eau du sol sous-jacent.

Dans une troisième forme de réalisation de l'invention, la raison de rendre le substrat imperméable est aussi de retarder l'évaporation de l'eau, par exemple dans un pot de fleur.

Les méthylsiliconates de sodium ou de potassium sont normalement vendu sous la forme de solution aqueuse, par exemple de l'ordre de 50 % de produit actif. On le dilue ensuite à la concentration souhaitée.

Le substrat utilisé n'est pas critique. Il est de préférence choisi dans le groupe constitué par le sable, le gravier, l'écorce d'arbres, la sciure, le compost, le terreau et un matériau rigide poreux. Pour la première forme de réalisation, le substrat utilisé est le sable, le gravier, l'écorce d'arbres, la sciure, le compost et le terreau. Pour la seconde forme de réalisation, le substrat est le sol. Pour la troisième forme de réalisation, le substrat est le matériau rigide poreux. Ce matériau rigide poreux est de préférence un pot pouvant contenir des plantes et des fleurs, par exemple un pot en terre cuite.

L'application des méthylsiliconates de sodium ou de potassium sur le substrat est effectuée par mélange, par trempage, par sprayage ou par arrosage. Dans la première forme de réalisation, on travaille par mélange, dans la seconde forme de réalisation, on fait plutôt un arrosage ou un sprayage et dans la troisième forme de réalisation on fait un trempage ou un sprayage.

Le méthylsiliconate de sodium ou de potassium permet d'hydrophober le substrat selon la première forme de réalisation. Ce substrat semi-perméable ou imperméable (partiellement ou totalement hydrophobé selon la concentration en siliconate) est répandu sur le sol à protéger à raison d'une couche de 5 à 50 mm d'épaisseur. L'eau d'irrigation est amenée en surface où elle rejoint la surface non traitée par gravité en empruntant les voies hydrophiles (bord du récipient ou tiges des plantes) ou encore par passage au travers du substrat semi-perméable. L'application du substrat est très large : on peut l'appliquer sur tout sol à protéger. Par sol à protéger, on entend tout type de sol sur lequel on veut réduire l'évaporation d'eau. On peut ainsi l'envisager soit dans des plantes d'appartement donc dans des pots ou bacs, soit sur un terrain, comme par exemple une pelouse pour le golf, pépinières, vergers ou autres plantations.

Le substrat traité, d'apparence sèche, ralentit remarquablement l'évaporation de l'humidité provenant de la terre sous-jacente, au prorata de l'épaisseur de la couche de substrat.

On définit un pouvoir de rétention R de la manière suivante: Quantité d'eau restante dans le sol par rapport à la quantité d'eau évaporée normalement dans les mêmes conditions climatiques (vent, température, durée) pour un sol sans le substrat. R est exprimée en % et les valeurs sont données dans le tableau suivant:

| Epaisseur | Rétention R |
|---|---|
| 5 mm | 26 % |
| 10 mm | 63 % |
| 15 mm | 85 % |
| 20 mm | 96 % |

On constate donc que déjà avec une épaisseur de 10 mm, on parvient à une bonne rétention d'eau.

L'invention concerne en outre un procédé de traitement d'un substrat choisi dans le groupe constitué par le sable, le gravier, l'écorce d'arbres, la sciure, le compost et le terreau, dans lequel on mélange entre 180 et 1000 g de méthylsiliconates de sodium ou de potassium en phase aqueuse par m3 dudit substrat et on le laisse sécher à la température ambiante. La teneur en siliconate est donnée par rapport au principe actif pur.

On mélange de préférence entre 250 et 500 g de méthylsiliconate de sodium ou de potassium par m3 de substrat.

On utilise le siliconate dans l'eau à une concentration comprise entre 0,15 et 2 %.

L'intérêt de ce procédé est que l'on peut mélanger et laisser sécher à la température ambiante. Ce qui ne serait pas le cas si on utilisait le polymère de silane tel que préconisé dans le brevet EP 341'334. En effet, dans ce cas, on serait obligé de chauffer à une température de l'ordre de 60 °C pendant 6 heures, pour permettre au polymère de réagir avec le substrat.

On dispose ainsi selon l'invention d'un moyen rapide et efficace de préparation d'un substrat hydrophobant. On peut alors envisager comme application, de faire ce traitement d'hydrophobation sur du sable, que l'on conditionne dans des sacs de 3, 5 ou 10 kg et que l'on vend dans des centres de jardinnage. Ce sable hydrophobé peut être utilisé pour des plantes d'appartement, pour des plantes en bacs et dans des jardins. On a constaté de façon générale que l'utilisation de ce substrat permet de réduire la fréquence d'arrosage d'un facteur de 4 à 7.

Comme exemples non limitatifs de plantes sur lesquelles on peut déposer le substrat traité, on peut citer :
a) Plantes nécessitant beaucoup d'eau:
   - Plantes d'appartement: Philodendron (Monstera deliciosa) Papyrus (Cyperus alternifolius) Coleus (Codiaeum "Reidii") Dieffenbachias
   - Plantes en bacs : Géraniums, Pétunias, Ciboulette
   - Plantes de jardin : Laitues
b) Plantes nécessitant une humidité modérée mais constante:
   - Plantes d'appartement : Pendant la période d'hiver
   - Plantes en bacs : Persil, Sauge, Lierre, Romarin.
   - Plantes de jardin : Framboisier, Mûrier, Pépinières.
c) Arbres fruitiers ou autres, comme palmiers et citronniers.

Dans la deuxième forme de réalisation, l'invention concerne un procédé de traitement d'un substrat qui est le sol, dans lequel on fait un traitement in situ du sol en arrosant ou en sprayant sur ledit sol une quantité de méthylsiliconate de sodium ou de potassium telle qu'on applique une quantité comprise entre 25 et 200 kg de méthylsiliconate par hectare. On prend la solution à la dilution souhaitable, compte tenu de la profondeur du sol à traiter et de la nature de ce sol.

Dans la troisième forme de réalisation de l'invention, l'invention concerne un procédé de traitement d'un substrat qui est un matériau rigide poreux, dans lequel on trempe ou on spraye le matériau rigide poreux dans ou avec une solution aqueuse contenant de 0,25 à 5 % de méthylsiliconate de sodium ou de potassium et on le laisse sécher à la température ambiante. Dans le cas du trempage, on a aussi bien hydrophobé la surface extérieure qu'intérieure du pot. Dans le cas du sprayage, on peut aussi bien envisager un sprayage d'une seule surface que des deux surfaces.

Le grand intérêt de la présente invention est d'imperméabiliser le pot en terre cuite et en outre de prévoir un substrat, tel que du sable, également traité. On évite ainsi l'évaporation de l'eau, aussi bien par le pot que par le terreau dans lequel se trouve la plante ou la fleur et sur le sol traité. Ce traitement n'empêche pas le mécanisme d'aération.

La suite de la description est faite en référence à un exemple.

### Exemple 1 : Le substrat est du sable

On dissout dans 35 l d'eau 50 g de méthylsiliconate de potassium (concentration de 0,15 %) et on l'ajoute sur 170 kg de sable (100 1)(ce qui correspond à 500 g de siliconate par m3 de sable). On fait le mélange à température ambiante et on laisse sécher à température ambiante. On obtient alors du sable semi-perméable. La durée de stockage ou la température plus élévée ne modifient pas la qualité du sable, la réaction étant immédiate à siccité et à température ambiante.

Pour obtenir une préparation totalement hydrophobe, il suffit d'augmenter la dotation en siliconate à 75 g dans l'exemple ci-dessus.

On utilise le sable ainsi hydrophobé sur une couche de 15 mm que l'on applique respectivement sur des plants de Papyrus, Coleus et Persil disposés dans une terre préalablement humidifiée.

On en arrive aux résultats suivants quant à l'arrosage :
- Papyrus : Sans le substrat, arrosage tous les 2 jours
   Avec le substrat, 2 fois par mois seulement
- Coleus : Sans substrat, arrosage tous les jours
   Avec le substrat, 1 fois par semaine seulement
- Persil : Sans substrat, 1-2 fois par semaine
   Avec le substrat, une fois par mois.

On dispose ainsi selon l'invention d'un moyen permettant de faire une économie substantielle d'eau et de diminuer la fréquence des arrosages du sol ainsi recouvert de substrat traité.

### Exemple 2 : Le substrat est un pot en terre cuite

On utilise un pot en terre cuite de 600 ml de volume ayant un diamètre intérieur de 124 mm. On prépare différentes solutions de méthylsiliconate de potassium et on immerge ledit pot pendant 5 minutes à froid et on le laisse sécher ensuite pendant 12 heures à température ambiante.

Les pots sont ensuite chargés de 500 ml d'eau du robinet et on quantifie le transfert de l'eau à travers les parois du pot après 1, 2 et 3 jours.
Les résultats sont indiqués sur le tableau ci-après :

| Concentration en siliconate % | Après 1 jour | Après 2 jours | Après 3 jours | Moyenne/jour |
|---|---|---|---|---|
| 0 | 118,9 g | 252,1 g | 364,2 g | 121,4 g |
| 0,05 | 69,3 g | 146,3 g | 222,9 g | 74,3 g |
| 0,25 | 14,1 g | 31,1 g | 43,1 g | 14,4 g |
| 0,5 | 0 | 0 | 0 | 0 |
| 1 | 0 | 0 | 0 | 0 |

On observe donc un effet de transfert diminué dans le cas de pot de terre déjà avec une concentration de 0,25 %.

### Exemple 3 : Pot traité contenant du sable traité

On utilise des pots de 10 cm de diamètre. L'échantillon 1 est non traité, l'échantillon 2 est traité avec du méthylsiliconate de potassium aussi bien sur la surface extérieure qu'intérieure et l'échantillon 3 est vitrifié sur ses deux faces.
On charge chaque pot avec 120 g de terre fibreuse à 50 % d'humidité et on y ajoute encore 70 g d'eau pour saturer le sol. Pour évaporer ces 70 g d'eau, il faut 3 jours pour le premier échantillon, 10 jours pour le second et 11 jours pour le dernier.
On arrive donc avec le traitement selon l'invention à avoir un pot aussi imperméable que s'il était vitrifié.
Si maintenant on dépose sur la surface du sol une couche de 15 mm de sable hydrophobé avec le siliconate de l'exemple 1, on arrive au résultat suivant. Pour l'échantillon 1, on évapore les 70 g d'eau en 3 jours, pour l'échantillon 2 en 23 jours et pour le dernier en 27 jours.

## Revendications

1. Procédé de traitement d'un substrat choisi dans le groupe constitué par le sable, le gravier, l'écorce d'arbres, la sciure, le compost et le terreau, **caractérisé en ce qu'**on mélange exclusivement entre 180 et 1000 g de méthylsiliconate de sodium ou de potassium en phase aqueuse par m3 dudit substrat et en on laisse sécher à température ambiante.

2. Procédé de traitement selon la revendication 1, **caractérisé en ce qu'**on mélange entre 250 et 500 g de méthylsiliconate de sodium ou de potassium par m3 dudit substrat.

3. Procédé de traitement selon l'une des revendications 1 ou 2, **caractérisé en ce qu'**on utilise le méthylsiliconate de sodium ou de potassium dans l'eau à une concentration comprise entre 0,15 et 2 %.

4. Procédé de traitement d'un substrat qui est un matériau rigide poreux, **caractérisé en ce qu'**on trempe ou on spraye ledit matériau rigide poreux dans ou avec une solution aqueuse contenant exclusivement de 0,25 à 5 % de méthylsiliconate de potassium ou de sodium et on le laisse sécher à la température ambiante.

5. Procédé de traitement d'un substrat qui est le sol, **caractérisé en ce qu'**on arrose ou on spraye ledit sol avec une solution aqueuse exclusive de méthylsiliconate de sodium ou de potassium de manière à appliquer sur ledit sol une quantité comprise entre 25 et 200 kg de méthylsiliconate par hectare.

## Claims

1. Process for the treatment of a substrate chosen from the group consisting of sand, gravel, tree bark, sawdust, compost and earth, **characterised by** mixing exclusively between 180 and 1000 g of sodium or potassium methylsiliconate in aqueous solution per cubic metre of the said substrate and allowing to dry at room temperature.

2. Process for the treatment according to claim 1, **characterised by** mixing between 250 and 500 g of sodium or potassium methylsiliconate in aqueous solution per cubic metre of the said substrate.

3. Process for the treatment according to claims 1 or 2, **characterised by** using sodium or potassium methylsiliconate in water at a concentration comprised between 0.15 and 2%.

4. Process for the treatment of a substrate that is a porous, rigid material, **characterised by** dipping or spraying the said substrate in or with an aqueous solution containing exclusively 0.25 to 5% sodium or potassium methylsiliconate and allowing it to dry at room temperature.

5. Process for the treatment of a substrate which is the surface of the ground, **characterised by** watering or spraying the said ground with an aqueous solution of exclusively sodium or potassium methylsiliconate so as to apply on the said ground a quantity of methylsiliconate in the range of 25 to 200 kg per hectare.

## Patentansprüche

1. Verfahren zur Behandlung von festen Materialien wie Sand, Kies, Holzrinden, Sägemehl, Kompost und Gartenerde, **dadurch gekennzeichnet, dass** man ausschliesslich zwischen 180 und 1000 g von Natrium oder Kalium Methylsiliconat in wässriger Lösung pro m3 des Materials beimischt und dass man bei Raumtemperatur trocknen lässt.

2. Verfahren gemäss Anspruch 1, **dadurch gekennzeichnet, dass** mann zwischen 250 und 500 g von Natrium oder Kalium Methylsiliconat pro m3 des Materials beimischt.

3. Verfahren gemäss Ansprüche 1 oder 2, **dadurch gekennzeichnet, dass** man Natrium oder Kalium Methylsiliconat in 0,15 bis 2 %ige wässrige Lösung verwendet.

4. Verfahren zur Behandlung von festen porösen Material, **dadurch gekennzeichnet, dass** man das Material ausschliesslich in eine 0,25 bis 5 %ige Natrium oder Kalium Methylsiliconat wässrige Lösung taucht oder aufsprüht und dass man bei Raumtemperatur trocknen lässt.

5. Verfahren zur Behandlung von Material wie Boden, **dadurch gekennzeichnet, dass** man der Boden ausschliesslich mit Natrium oder Kalium Methylsiliconat wässrige Lösung giesst oder aufsprüht, so dass eine Menge zwischen 25 und 200 kg von Methylsiliconat pro Hektar auf dem Boden appliziert wird.
